# EUROPEAN PATENT APPLICATION

(11) **EP 2 075 543 A2**
(43) Date of publication of application: **01.07.2009**
(21) Application number: 08021403.4
(22) Date of filing: 09.12.2008
(51) Int. Cl.: G01C 21/36

(54) **Three-dimensional map display navigation device, three-dimensional map display system, and three-dimensional map display program**

(30) Priority: 26.12.2007 JP 2007334361
(71) Applicant: Aisin AW Co., Ltd., Fujii-cho Anjo-shi, Aichi 444-1192 (JP)
(72) Inventor: Ushida, Koichi, Okazaki-shi Aichi 444-8564 (JP); Miyamoto, Shinya, Sapporo City Hokkaido 004-0015 (JP); Yamamoto, Kazuyoshi, Sapporo City Hokkaido 004-0015 (JP)
(74) Representative: Kramer - Barske - Schmidtchen

(57) **Abstract**

A three-dimensional map display navigation device includes a map database having a road database that stores road data and a stereograph database that stores stereographic data of a solid body; a route information storage portion for storing route information pertaining to a guidance route set based on the road data; a stereographic data reading unit for accessing the map database, computing a discrete distance between the guidance route and the solid body, and transferring stereographic data pertaining to the solid body that has been simplified depending on the discrete distance to a buffer portion; and a map image generating unit for generating a three-dimensional map image for route guidance based on the stereographic data loaded from the buffer portion.

## Description

### BACKGROUND OF THE INVENTION

### 1. Field of the Invention

The present invention relates to art for three-dimensional map display, more specifically, a navigation device and a three-dimensional map display system that display a three-dimensional map, and a three-dimensional map display program that creates and displays a three-dimensional map based on stereographic data.

### 2. Description of the Related Art

There are known navigation devices that read out map data from a map database constructed within a DVD or a hard disk to display a map of buildings, roads, and the like on a screen, and also display a host vehicle position detected by a host vehicle position detection sensor such as a GPS and a direction to a destination as a guidance route on a map. In such case, easily understandable road guidance can be achieved by storing stereographic data for solid bodies in the map database and three-dimensionally displaying buildings in the vicinity of a road to be traveled. However, three-dimensionally displaying a solid body requires an immense number of polygons to construct the side faces of each solid body compared to a two-dimensional display, and this in turn increases the computational load of a computer. Also, the screen size of a monitor used by the navigation device or the like is comparatively small, and locations where buildings are close together may actually be harder to visually understand when the solid bodies are displayed using a large number of polygons.

In order to resolve issues such as the above, a known navigation device reads map information within a display area that is set depending on a position of a moving body or a position instructed by a user from a map database. Using the map information, the navigation device generates a perspective map as seen from a preset viewpoint, and generates a map image using a three-dimensional map display method wherein a landscape corresponding to the perspective map is shown on a display screen. A display mode of a map element included in the map information from the viewpoint is changed depending on any one of a horizontal distance, a linear distance, and a difference in altitude to the map element (see Japanese Patent Application Publication No. JP-A-2000-221876, paragraphs 0008 to 0018 and FIG. 10). In such case, it has been proposed with respect to changing the display mode that for (a) map elements for which any one of the horizontal distance, linear distance, and difference in altitude with the viewpoint is equal to or greater than a predetermined value, (b) map elements for which any one of the horizontal distance, linear distance, and difference in altitude with the viewpoint is equal to or less than a predetermined value, or (c) map elements that exist between the viewpoint and a position deserving attention set within the display area, the display mode thereof is changed to one with a greater degree of drawing detail or one with lower visibility compared to remaining map elements.

### SUMMARY OF THE INVENTION

According to the three-dimensional map display art of Japanese Patent Application Publication No. JP-A-2000-221876 (paragraphs 0008 to 0018 and FIG. 10), the degree of drawing detail for three-dimensionally showing a map element to be displayed is reduced based on a relationship with a viewpoint position for three-dimensional display. Consequently, the computational load of the computer is less than that when all of the map elements are displayed with a high degree of drawing detail. However, with this three-dimensional map display art, a simplified judgment is made each time the relationship between the viewpoint position and the map element changes. As a result, although a drawing load may decrease, the computational load for making simplified judgments increases. Such art is thus not effective with respect to an overall computer load related to three-dimensional map display, and in some cases, may even lead to an increase in the computer load. The present invention was devised in light of the foregoing issue, and it is an object of the present invention to provide three-dimensional map display art that reduces an overall computer load related to three-dimensional map display, in addition to reducing a drawing load.

In order to resolve the above issue, a three-dimensional map display navigation device according to the present invention includes: a map database having a road database that stores road data and a stereograph database that stores stereographic data of a solid body; a route information storage portion for storing route information pertaining to a guidance route set based on the road data; a stereographic data reading unit for accessing the map database, computing a discrete distance between the guidance route and the solid body, and transferring stereographic data pertaining to the solid body that has been simplified depending on the discrete distance to a buffer portion; and a map image generating unit for generating a three-dimensional map image for route guidance based on the stereographic data loaded from the buffer portion.

According to this structure, depending on the discrete distance between the guidance route set based on the road data and a solid body, stereographic data pertaining to the solid body that has been simplified is transferred to the buffer portion. Based on the stereographic data loaded from the buffer portion, a three-dimensional map image for route guidance is then generated during drawing processing of the solid body. In other words, before drawing processing for the solid body, stereographic data whose simplification is determined depending on the discrete distance between the guidance route and the solid body is transferred to the buffer portion at the stage where stereographic data is transferred from the stereograph database to the buffer portion. Accordingly, during generation of the three-dimensional map image for route guidance, stereograph from the buffer portion is always used. There is thus no need to judge simplification every time a relationship between a viewpoint position and a map element changes as with the related art described above. As a consequence, an overall computer load related to three-dimensional map display is reduced. In addition, less memory capacity is used for such three-dimensional map display processing.

Furthermore, a plurality of different characteristic structures can be employed for the transfer of simplified stereographic data by the stereographic data reading unit to the buffer portion. One such structure involves transferring stereographic data that has been more simplified in accordance with a long discrete distance to the buffer portion. According to this characteristic structure, the solid body is drawn with a more simplified form as the discrete distance between the solid body and the route increases. Therefore, the advantage of almost no distortion compared to the actual scene can be secured. Another such structure uses a set discrete distance threshold as a judgment criterion, and, for a solid body whose computed discrete distance is greater than the discrete distance threshold, transfers simplified stereographic data to the buffer portion, and, for a solid body whose computed discrete distance is equal to or less than the discrete distance threshold, transfers detailed stereographic data to the buffer portion. According to this characteristic structure, if there is one discrete distance threshold, then only one type of stereographic data need be employed; if a plurality of discrete distance thresholds is used, then performing simplification processing is easier than continuously changing a degree of simplification, and is advantageous in terms of processing speed. In cases where one or more discrete distance thresholds are used as judgment criteria, the discrete distance thresholds may be variably set in accordance with a road condition or a road environment condition, which is advantageous for giving flexibility to simplification of the stereographic data.

In general, the stereographic data prepared for storage in the stereograph database is detailed stereographic data. Such detailed stereographic data can be used for drawing when the detailed stereographic data is read intact from the stereograph database and transferred to the buffer portion. However, simplified stereographic data must be newly created from the detailed stereographic data. Regarding the handling of such simplified stereographic data, the present invention proposes two characteristic structures. In one such structure, the stereograph database stores detailed stereographic data and simplified stereographic data pertaining to the same solid body, and the stereographic data reading unit reads from the stereograph database one of the detailed stereographic data and the simplified stereographic data depending on the discrete distance. According to this characteristic structure, simplified stereographic data is created in advance and stored in the stereograph database. Therefore, the simplified stereographic data can be directly read from the stereograph database and the simplified stereographic data read is then transferred to the buffer portion. The reading/transfer speed of simplified stereographic data is faster than the reading/transfer speed of detailed stereographic data due to a smaller volume of data, and there is no need for processing to convert the detailed stereographic data into simplified stereographic data. In another such structure, the stereograph database stores only detailed stereographic data pertaining to the same solid body. For a solid body with a long discrete distance, the stereographic data reading unit converts the detailed stereographic data thereof as read from the stereograph database into simplified stereographic data through simplification processing, and transfers the simplified stereographic data to the buffer portion. According to this characteristic structure, the detailed stereographic data must be converted into simplified stereographic data, but there is no need to prepare the simplified stereographic data in advance, which is advantageous in terms of reducing the volume of the stereograph database.

To convert detailed stereographic data into simplified stereographic data, any one of the following methods or a combination thereof is preferable: reducing either or both a resolution and a gradient of texture data of the detailed stereographic data; and reducing a number of polygons of polygon data. Since the texture data is image data, reducing the resolution or the gradient greatly reduces a volume of data thereof. Likewise, reducing the number of polygons of the polygon data greatly shortens a depiction speed of a solid.

Moreover, if the discrete distance is a shortest distance between the guidance route and a plane outer shape in stereographic data of the solid body, then the discrete distance can be obtained through a simple coordinate calculation, which is advantageous in terms of computer computation.

The technical aspects of the three-dimensional map display navigation device of the present invention as described above are applied to three-dimensionally displaying a guidance route and surrounding solid bodies using a guidance route such as that used in a car navigation system or the like as a reference. However, the present invention can also be applied to a multi-purpose three-dimensional map display system that, by instructing a specific section of a specific road, three-dimensionally displays a road and solid bodies surrounding the specific road section. Such a three-dimensional map display system according to the present invention includes: a map database having a road database that stores road data and a stereograph database that stores stereographic data of a solid body; a road information storage portion for storing road information pertaining to a set road set in advance based on the road data; a stereographic data reading unit for accessing the map database, computing a discrete distance between the set road and the solid body, and transferring stereographic data pertaining to the solid body that has been simplified depending on the discrete distance to a buffer portion; and a map image generating unit for generating a three-dimensional map image for the set road based on the stereographic data loaded from the buffer portion.

Furthermore, the technical aspects of the three-dimensional map display navigation device according to the present invention are also applicable to a three-dimensional map display navigation program and the scope of the present invention extends to such a method and program. For example, according to the present invention, a three-dimensional map display program for a three-dimensional map display navigation device, which includes a map database having a road database that stores road data and a stereograph database that stores stereographic data of a solid body, and a route information storage portion for storing route information pertaining to a guidance route set based on the road data, performs in a computer the functions of: accessing the map database, computing a discrete distance between the guidance route and the solid body, and transferring stereographic data pertaining to the solid body that has been simplified depending on the discrete distance to a buffer portion; and generating a three-dimensional map image for route guidance based on the stereographic data loaded from the buffer portion. Naturally such a three-dimensional map display program is capable of obtaining the operations and effects described for the three-dimensional map display navigation device above, and is capable of incorporating several additional arts described above as examples of preferred embodiments.

### BRIEF DESCRIPTION OF THE DRAWINGS

FIG. 1 is a block diagram of a three-dimensional map display navigation device according to an embodiment of the present invention;
FIG. 2 is a data structure diagram showing an example of road data;
FIG. 3 is a data structure diagram showing an example of stereographic data;
FIG. 4 is a block diagram of a stereograph reading unit;
FIG. 5 is a flowchart showing the flow of a stereographic data reading control;
FIG. 6 is a drawing showing an example of a solid body drawn based on detailed stereographic data and displayed on a monitor;
FIG. 7 is a drawing showing an example of a solid body drawn based on simplified stereographic data and displayed on a monitor;
FIG. 8 is a monitor display of a three-dimensional map drawn based on the detailed stereographic data and the simplified stereographic data;
FIG. 9 is a block diagram of a stereograph reading unit according to another embodiment; and
FIG. 10 is a flowchart showing the flow of the stereographic data reading control according to another embodiment.

### DETAILED DESCRIPTION OF THE PREFERRED EMBODIMENTS

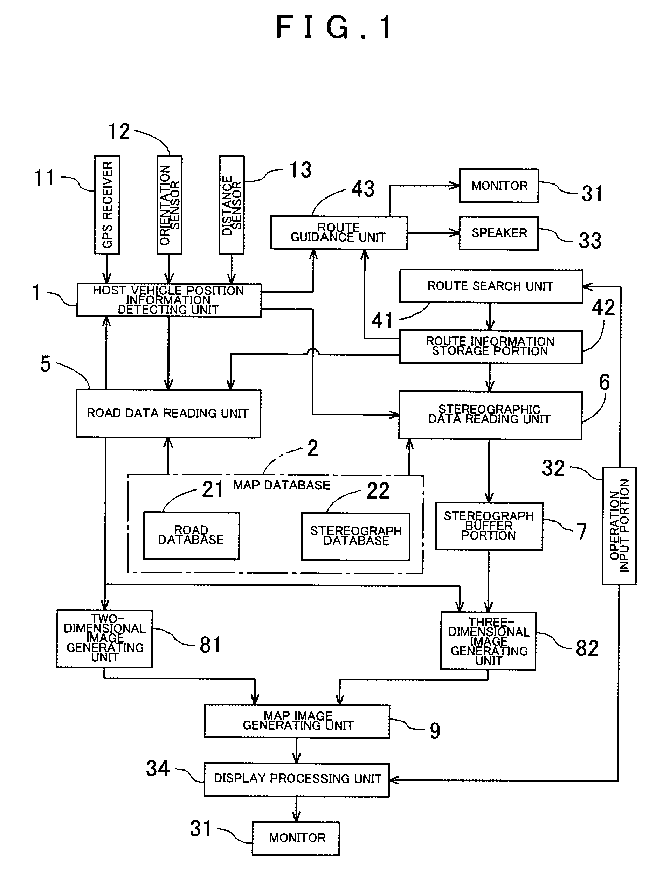

Embodiments of the present invention will be described based on the accompanying drawings. FIG. 1 is a block diagram schematically showing a configuration of essential elements of a three-dimensional map display navigation device according to the present embodiment. Based on host vehicle position information output from a host vehicle position information detecting unit 1, the three-dimensional map display navigation device reads road data and stereographic data required for a three-dimensional map display from a map database 2. A three-dimensional map image for route guidance created using such data is then displayed on a monitor 31 superimposed with a symbol indicating a host vehicle position as necessary. A route searching unit 41 searches for an optimum guidance route that links a current position and a point (such as a destination) specified by a user through an operation input portion 32, and the searched guidance route is set in the route information storage portion 42. Based on the set guidance route and the host vehicle position, the route guidance unit 43 performs route guidance for the user via a speaker 33 and the monitor 31.

The operation input portion 32 has a function for accepting an instruction from the user, and is structured from a touch panel, a functional operation button, a software button, and the like. The touch panel and the software button operating in association with a display processing unit 34 construct a user graphic interface.

The host vehicle position information detecting unit 1 obtains the host vehicle position information specifying the host vehicle position, i.e., the current position of the host vehicle. In this embodiment, the host vehicle position information detecting unit 1 is connected with a GPS receiver 11, an orientation sensor 12, and a distance sensor 13. Here, the GPS receiver 11 is a device that receives a GPS signal from a GPS satellite. The GPS signal is normally received every second, and output to the host vehicle position information detecting unit 1. In the host vehicle position information detecting unit 1, the signal received by the GPS receiver 11 from the GPS satellite can be analyzed to obtain the current position (latitude and longitude), direction of travel, speed of movement, and the like of the host vehicle. The orientation sensor 12 detects the traveling direction of the host vehicle and changes in the direction of travel. The orientation sensor 12 is structured from a gyro sensor, a geomagnetic sensor, an optical rotation sensor or rotation type resistance volume attached to a rotating portion of a steering wheel, and an angular sensor attached to a vehicle wheel portion, for example, and outputs a detection result thereof to the host vehicle position information detecting unit 1. The distance sensor 13 detects a vehicle speed and a movement distance of the host vehicle. The distance sensor 13 is structured from a vehicle speed pulse sensor that outputs a pulse signal every time a drive shaft, wheel, or the like of the host vehicle rotates a certain amount, a yaw/G sensor that detects an acceleration of the host vehicle, and a circuit that integrates the detected acceleration, for example. Also, the distance sensor 13 outputs information regarding the vehicle speed and the movement distance as a detection result thereof to the host vehicle position information detecting unit 1.

Based on the output from the GPS receiver 11, the orientation sensor 12, and the distance sensor 13, the host vehicle position information detecting unit 1 performs a computation according to a known method to specify the host vehicle position. In addition, the host vehicle position information detecting unit 1 obtains the map data around the host vehicle position from the map database 2. By performing known map matching based thereon, the host vehicle position information detecting unit 1 also corrects the host vehicle position to match the road indicated in the map data. In this manner, the host vehicle position information detecting unit 1 obtains host vehicle position information that includes information regarding the current position of the host vehicle expressed in latitude and longitude, and information regarding the traveling direction of the host vehicle.

The map database 2 includes a road database 21 that stores road data, and a stereograph database 22 that stores stereographic data of a solid body. The map database 2 is structured from a high-capacity storage medium such as a DVD or a hard disk. In addition, when a rewritable storage medium is employed, fresh map data can be downloaded via data communications as appropriate.

A two-dimensional data reading unit 5 is also provided for reading out road data from the road database 21 and relaying such road data to a working memory. Road data relayed to the working memory is used by a two-dimensional image generating unit 81 to generate a two-dimensional image suitable as a display map image.

Also provided is a stereographic data reading unit 6 that accesses the stereograph database 22, computes a discrete distance between the guidance route and a solid body, and transfers stereographic data pertaining to the solid body, which has been simplified depending on the obtained discrete distance, to a stereograph buffer portion 7, namely, a buffer portion structured by the working memory. According to this embodiment, detailed stereographic data and simplified stereographic data pertaining to the same solid body are stored in the stereograph database 22. Therefore, the stereographic data reading unit 6 in the embodiment is structured such that, depending on the obtained discrete distance, either one of the detailed stereographic data and the simplified stereographic data are read from the stereograph database 22 and transferred to the stereograph buffer portion 7.

Transfer of the stereographic data for a solid body to the stereograph buffer portion 7 is performed in units of predetermined partitions before three-dimensional drawing processing for the solid body. Until the host vehicle passes through a predetermined partition unit, stereographic data of the solid bodies included in the predetermined partition unit is stored in the stereograph buffer portion 7. The three-dimensional drawing processing for the solid body using the detailed stereographic data or the simplified stereographic data stored in the stereograph buffer portion 7 is performed by a three-dimensional image generating unit 82 using a known three-dimensional drawing algorithm.

An image that has been generated by the two-dimensional image generating unit 81 or the three-dimensional image generating unit 82 or both is generated by a map image generating unit 9 into a map image suitable for display on the monitor 31. The display processing unit 34 superimposes various information and symbols on the map image as necessary, converts such data into monitor display data, and outputs the monitor display data to the monitor 31.

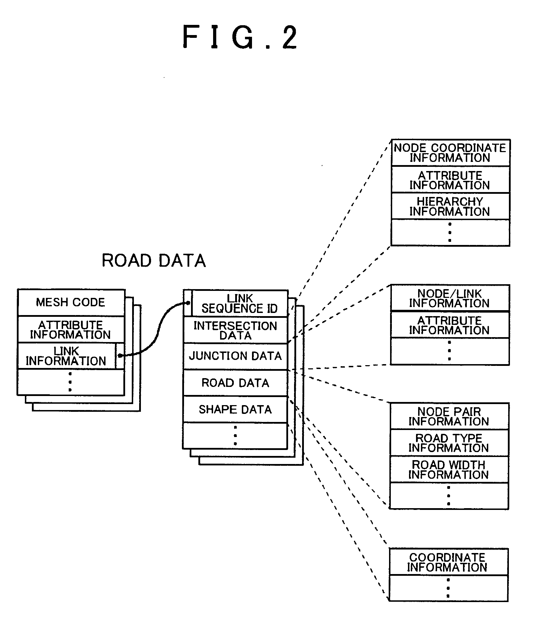

FIG. 2 shows a schematic data structure of road data stored in the road database 21 of the map database 2. The road data stored in the road database 21 is controlled using standard area meshes that specify sections divided by longitudes and latitudes at a predetermined interval. Mesh codes are given to the standard area meshes. The road data has a data structure divided into a control table region and an actual data region. The control table region includes the mesh code, attribute information such as the date of creation, and link information specifying a link destination to actual data. In the actual data region, data are controlled for each link sequence ID, with the link sequence ID serving as a link destination of the link information. The actual data region records intersection data, junction data, road data, and shape data. The intersection data includes coordinate information for a node specifying an intersection, attribute information for the intersection that specifies whether a traffic signal or a road sign exists at the intersection, and hierarchy information specifying up to how many layers the intersection (node) is included in among a plurality of layers. The junction data includes node/link information specifying which roads (links) are connected to a node indicating an intersection, and attribute information specifying whether guidance is required depending on the travel direction at the intersection or whether regulations exist. The road data includes node pair information for a link indicating a road, road type information, road width information, lane quantity information, and hierarchy information specifying up to how many layers the road (link) is included in among a plurality of layers. The shape data includes coordinate information of a group of shape interpolation points that controls the shape of a link indicating a road.

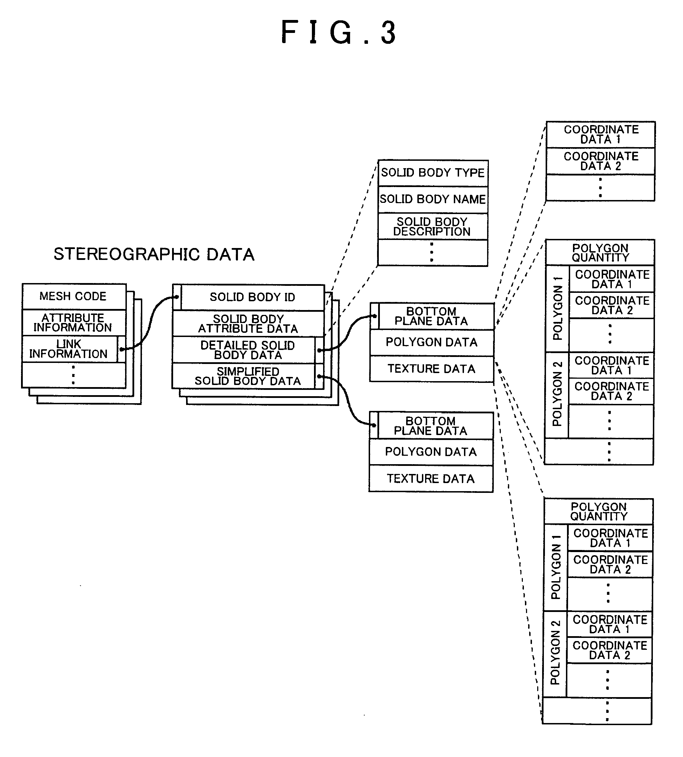

FIG. 3 shows a schematic data structure of stereographic data stored in the stereograph database 22 of the map database 2. The stereographic data stored in the stereograph database 22 is also controlled using standard area meshes that specify sections divided by longitudes and latitudes at a predetermined interval, and the stereographic data has a data structure divided into a control table region and an actual data region. The control table region includes the mesh code, attribute information such as the date of creation, and link information specifying a link destination to actual data.

In the actual data region, stereographic data of a solid body are controlled for each solid body ID, with the solid body ID serving as a link destination of the link information. According to this embodiment, detailed stereographic data and simplified stereographic data pertaining to the same solid body are prepared. Therefore, solid body attribute data, detailed stereographic data, simplified stereographic data and so on are recorded for each solid body ID. The solid body attribute data includes information pertaining to attributes of the solid body such as the type of solid body, the name of the solid body, and a description of the solid body. The data structures of the detailed stereographic data and the simplified stereographic data are identical, and both include bottom plane data, polygon data, and texture data. The bottom plane data consists of two-dimensional region data associated with the solid body, as well as information regarding a site including the solid body and a bottom plane or the like of the solid body, and the bottom plane data includes a group of two-dimensional coordinate data for each vertex specifying the bottom plane. The polygon data is data for a polygon used in order to three-dimensionally draw the solid body, and includes a number of polygons structuring the solid body, an identifier for identifying a polygon structuring the solid body, and coordinate data for vertices of the polygon identified by the polygon identifier. The texture data is image data of an image attached to the polygon, and includes texture image data corresponding to each polygon.

Differences in the detailed stereographic data and the simplified stereographic data regarding respective bottom plane data, polygon data, and texture data arise from the simplified stereographic data being a simplified version of the detailed stereographic data. With respect to the bottom plane data and the polygon data, for example, simplification is realized by culling the number of polygon vertices. Regarding the texture data as well, simplification is achieved by reducing either or both a resolution and a gradient of the texture image data.

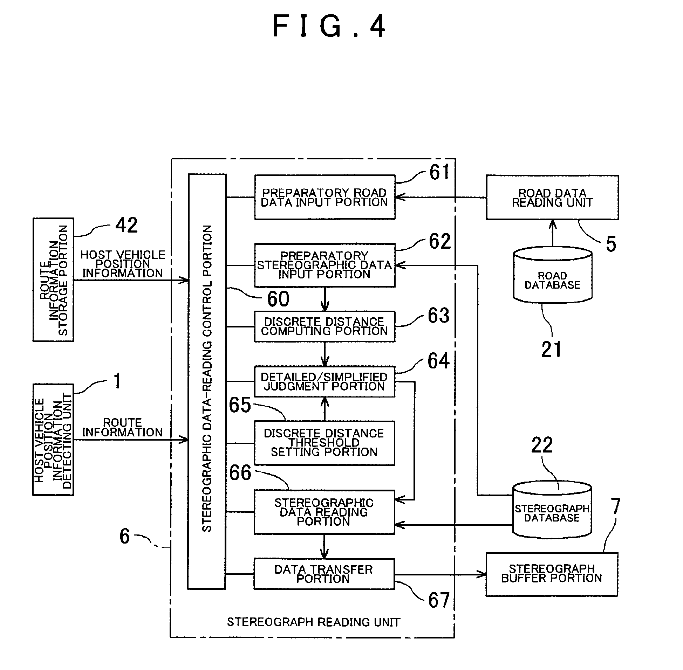

FIG. 4 shows a block diagram of functional elements of the stereographic data reading unit 6, which accesses the map database 2 and transfers to the stereograph buffer portion 7 stereographic data pertaining to solid bodies simplified depending on a discrete distance between the guidance route and the surrounding solid bodies. According to this embodiment, the stereographic data reading unit uses a set discrete distance threshold as a judgment criterion and transfers detailed stereographic data pertaining to a solid object whose computed discrete distance is equal to or less than the discrete distance threshold to the stereograph buffer portion 7. Furthermore, for a solid object whose computed discrete distance is greater than the discrete distance threshold, simplified stereographic data is transferred to the stereograph buffer portion 7.

The stereograph buffer portion 7 is provided with a stereographic data reading control portion 60, a preparatory road data input portion 61, a preparatory stereographic data input portion 62, a discrete distance computing portion 63, a detailed/simplified judgment portion 64, a discrete distance threshold setting portion 65, a stereographic data reading portion 66, and a data transfer portion 67.

The stereographic data reading control portion 60 manages and controls the operation of the aforementioned functional elements of the stereograph reading unit 6. The preparatory road data input portion 61 receives position information (coordinate data) and the like regarding a road section on which the host vehicle will travel, as specified by a guidance route stored in the route information storage portion 42 and the host vehicle position information, from the road database 21 via the two-dimensional road data reading unit 5 for use in the discrete distance computation. The preparatory stereographic data input portion 62 reads the bottom plane data and the like of a solid body located around the road section from the stereograph database 22 for use in the discrete distance computation. The discrete distance computing portion 63 uses position information of the road section secured by the preparatory road data input portion 61 and bottom plane data and the like of the solid body secured by the preparatory stereographic data input portion 62 to compute the shortest distance between the road section, i.e., the guidance route, and plane outer shapes of the surrounding solid bodies as the discrete distance. It should be noted that the bottom plane data of the solid body is used as data pertaining to the plane outer shape of the solid body. Here, the shortest distance between the road section and the plane outer shape of the solid body is set as the discrete distance. However, a distance along a road connected between the road section and the plane outer shape of the solid body may also be employed as the discrete distance.

The detailed/simplified judgment portion 64 uses the set discrete distance threshold as a judgment criterion to determine which of the detailed stereographic data and the simplified stereographic data of the targeted solid body should be selected in accordance with the discrete distance computed by the discrete distance computing portion 63. The discrete distance threshold is set by the discrete distance threshold setting portion 65. According to this embodiment, a predetermined value set in advance, e.g. 100 m, is used as the discrete distance threshold. Naturally a structure may also be adopted in which the discrete distance threshold can be variably set in accordance with a road condition or a road environment condition. For example, if a road section has a wide road width, it is convenient to increase the discrete distance threshold so as to eliminate the influence of the road width on the discrete distance.

The stereographic data reading portion 66 reads the detailed stereographic data or the simplified stereographic data of the applicable solid body from the stereograph database 22 in accordance with the content determined by the detailed/simplified judgment portion 64. The data transfer portion 67 transfers the detailed stereographic data or the simplified stereographic data read by the stereographic data reading portion 66 to the stereograph buffer portion 7. The detailed stereographic data or the simplified stereographic data transferred to the stereograph buffer portion 7 is utilized by the three-dimensional image generating unit 82 for three-dimensional map generation. Once the vehicle passes by the applicable solid body, the stereographic data thereof is deleted from the stereograph buffer portion 7.

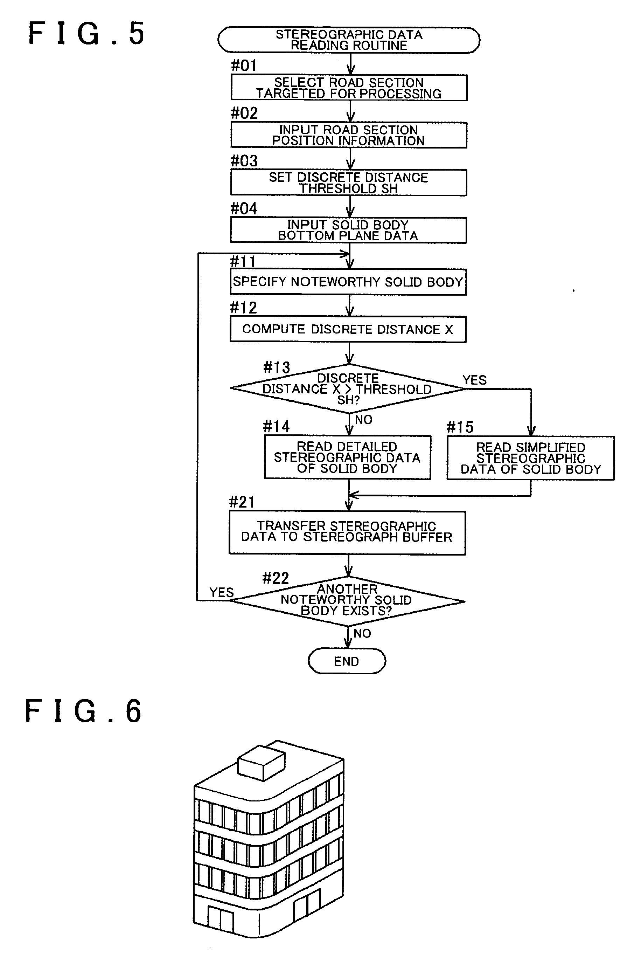

Using the flowchart shown in FIG. 5, the flow of load processing for stereographic data performed by the stereographic data reading unit 6 structured as described above will be explained. First, the stereographic data reading control portion 60 selects a section for which a three-dimensional map will be created among a guidance route as a road section targeted for processing (#01). The position information of the selected road section is input from the road database 21 via the preparatory road data input portion 61 (#02). The discrete distance threshold setting portion 65 sets a discrete distance threshold SH for the detailed/simplified judgment portion 64 (#03). At such time, the discrete distance threshold SH may be varied by a road condition or a road environment condition of the selected road section, such as road width and road type. Next, the bottom plane data of a solid body located around the selected road section is input from the solid body database 22 via the preparatory stereographic data input portion 62 (#04).

Preparation to compute the discrete distance between the selected road section (guidance route) and the solid body is completed in the above steps, and processing is sequentially performed for each solid body located around the selected road section. First, the stereographic data reading control portion 60 specifies a noteworthy solid body to be targeted for processing (#11). The discrete distance computing portion 63 computes a discrete distance X between the noteworthy solid body and the selected road section (#12). A comparison is made of the calculated discrete distance X and the discrete distance threshold SH (#13). If the discrete distance X is equal to or less than the discrete distance threshold SH (NO at #13), then the detailed stereographic data of the noteworthy solid body is read from the stereograph database 22 via the stereographic data reading portion 66 (#14). If the discrete distance X is greater than the discrete distance threshold SH (YES at #13), then the simplified stereographic data of the noteworthy solid body is read from the stereograph database 22 via the stereographic data reading portion 66 (#15). The stereographic data read via the stereographic data reading portion 66 is transferred to the stereograph buffer portion 7 by the data transfer portion 67 (#21). Next, the stereographic data reading control portion 60 checks whether any solid bodies specified as noteworthy solid bodies are remaining (#22). If there are solid bodies remaining (YES at #22), then the routine returns to step #11, where a noteworthy solid body is specified. The processing from #12 to #21 is then repeated. If there are no solid bodies remaining (NO at #22), then the routine is ended.

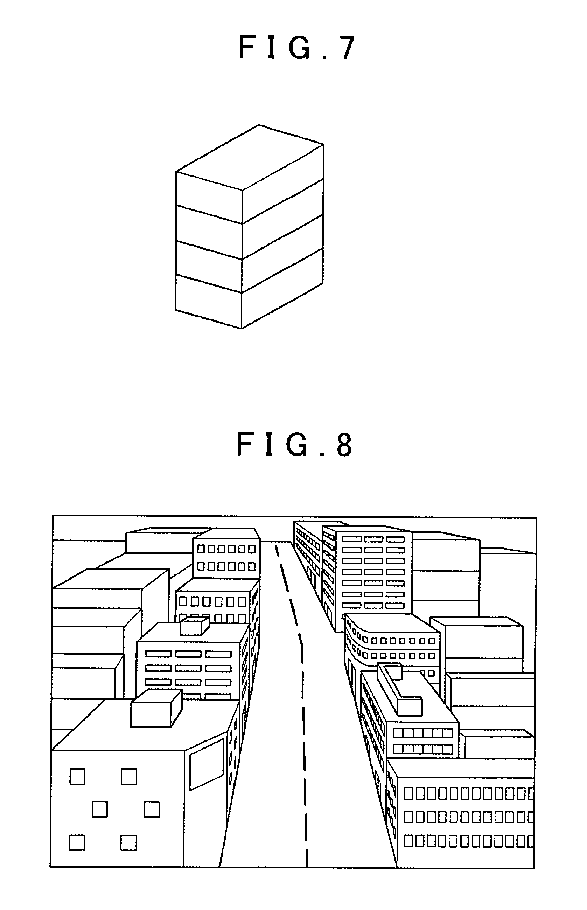

For each solid body specified for three-dimensional drawing, a solid body is drawn by the three-dimensional image generating unit 82 based on the detailed stereographic data or the simplified stereographic data thereof transferred to the stereograph buffer portion 7. If the detailed stereographic data regarding a certain solid body is transferred to the stereograph buffer portion 7 via the stereographic data reading unit 6, then as exemplified in FIG. 6, a solid body with a detailed outer appearance is depicted through the use of a plurality of polygons. Furthermore, a solid body closely resembling the texture of the actual body is drawn due to the high resolution and gradient of the texture image attached to each polygon. On the other hand, in the case of a solid body for which the simplified stereographic data is transferred to the stereograph buffer portion 7 via the stereographic data reading unit 6, as exemplified in FIG. 7, since polygons with many vertices culled are used and some small polygons may be omitted, a solid body with a simplified outer shape is drawn. Furthermore, the speed of drawing processing for the solid body can be increased due to the low resolution and gradient of the texture image attached to each polygon.

Once drawing of the solid bodies entering a stereo field of view from a specific viewpoint is completed by the three-dimensional image generating unit 82, the road being traveled and a three-dimensional map image are created and displayed on the monitor 31 via the display processing unit 34. An example of the three-dimensional map image displayed on the monitor 31 is shown in FIG. 8. As evident from FIG. 8, solid bodies far from the road, i.e., the guidance route, are drawn simplified, and solid bodies close to the road are drawn detailed. This relationship remains the same regardless of whether the host vehicle is traveling and approaches a specific solid body. Namely, this is due to the fact that the stereographic data initially determined based on the discrete distance between the guidance route and the solid body and then transferred to the stereograph buffer portion 7 is used without change. In other words, whether the stereographically drawn solid body is shown detailed or simplified is determined by which mode is initially transferred to the stereograph buffer portion 7.

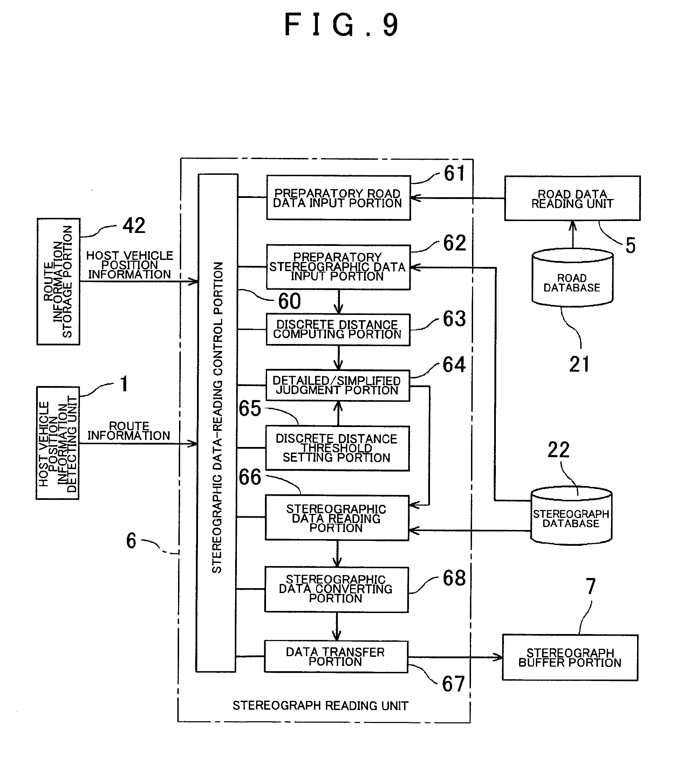

Other Embodiments
In the above embodiment, detailed stereographic data and simplified stereographic data pertaining to each stereograph is stored in the stereograph database 22 of the map database 2. The discrete distance computing portion 63 compares the discrete distance and the discrete distance threshold, and the detailed stereographic data or the simplified stereographic data of a solid body targeted for drawing is transferred to the stereograph buffer portion 7. Alternatively, a structure may be adopted in which only detailed stereographic data pertaining to each stereograph is stored in the stereograph database 22. If simplified stereographic data is required, then before the stereographic data is transferred from the stereographic data reading portion 66 to the stereograph buffer portion 7 via the data transfer portion 67, the detailed stereographic data is converted into simplified stereographic data. A block diagram of the stereograph reading unit 6 according to such an embodiment is shown in FIG. 9. Unlike the block diagram (see FIG. 4) of the stereograph reading unit 6 according to the previous embodiment, a stereographic data converting portion 68 that converts detailed stereographic data into simplified stereographic data is added.

In the three-dimensional map display navigation device of the other embodiment, the stereograph database 22 stores only detailed stereographic data pertaining to the same solid body. In the stereographic data reading unit 6, for a solid body whose discrete distance as found by the discrete distance computing portion 63 is long, the detailed stereographic data thereof read from the stereograph database is converted into simplified stereographic data through simplification processing performed by the stereographic data converting portion 68. Such simplified stereographic data is then transferred to the stereograph buffer portion 7. At such time, similar to the previous embodiment, the discrete distance threshold set by the discrete distance threshold setting portion 65 may be used as the judgment criterion, and for a solid body whose computed discrete distance is equal to or less than the discrete distance threshold, detailed stereographic data is transferred to the buffer portion, whereas for a solid body whose computed discrete distance is greater than the discrete distance threshold, simplified stereographic data is transferred to the buffer portion. In addition, the stereographic data converting portion 68 may also adopt a structure capable of converting the detailed stereographic data into stereographic data with varying degrees of simplification, and stereographic data that is more simplified in accordance with a longer discrete distance is transferred to the buffer portion.

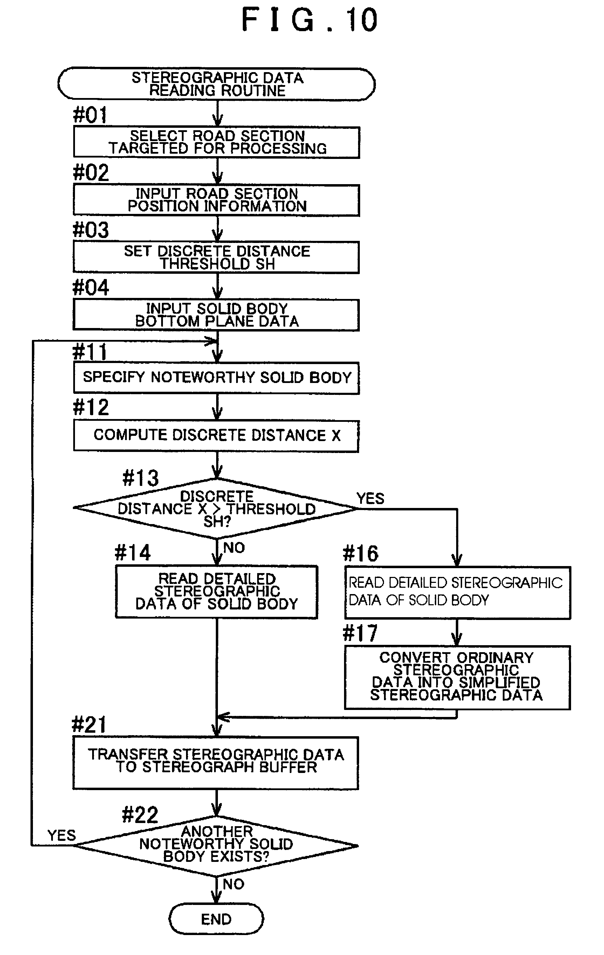

A flowchart in FIG. 10 shows the flow of a stereographic data reading control performed by the stereographic data reading unit 6 in this embodiment. The difference with the flow (see FIG. 5) of the stereographic data reading control in the previous embodiment is with regard to processing when the discrete distance X is greater than the discrete distance threshold SH, namely, YES at the judgment of step #13. In this case, simplified stereographic data is not included in the stereograph database 22, and therefore the stereograph data reading portion 66 reads the detailed stereographic data from the stereograph database 22 (#16). The detailed stereographic data read is then converted into the above-described simplified stereographic data by the stereographic data converting portion 68 (#17). The converted simplified stereographic data is subsequently transferred to the buffer portion 7 by the data transfer portion 67 (#21). In other words, this embodiment is different from the previous embodiment only in that step #15 is replaced with steps #16 and #17. At such time, for the conversion into simplified stereographic data, the detailed stereographic data may be simplified based on a degree of simplification that varies in accordance with the discrete distance.

The three-dimensional map display navigation device of the above embodiments focuses on three-dimensionally displaying a guidance route and surrounding solid bodies using a guidance route such as that used in a car navigation system or the like as a reference. However, the present invention can also be applied to a simple map display system such as a multi-purpose three-dimensional map display system that, by instructing a specific section of a specific road, three-dimensionally displays a road and solid bodies surrounding the specific road section.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation device for three-dimensional map display, comprising:
a map database (2) having a road database (21) that is adapted to store road data and a stereograph database (22) that is adapted to store stereographic data of a solid body;
a route information storage portion (42) for storing route information pertaining to a guidance route set based on the road data;
a stereographic data reading unit (6) for accessing the map database (2), computing a discrete distance between the guidance route and the solid body, and transferring stereographic data pertaining to the solid body to a buffer portion (7), the stereographic data being selectively simplified depending on the discrete distance; and
a map image generating unit (9) for generating a three-dimensional map image for route guidance based on the stereographic data loaded from the buffer portion (7).

2. The navigation device according to claim 1, wherein
the stereographic data reading unit (6) is adapted to transfer stereographic data that is more simplified in accordance with a longer discrete distance to the buffer portion (7).

3. The navigation device according to claim 1 or 2, wherein
the stereographic data reading unit (6) is adapted to use a set discrete distance threshold as a judgment criterion, and, for a solid body whose computed discrete distance is greater than the discrete distance threshold, is adapted to transfer simplified stereographic data to the buffer portion (7), and, for a solid body whose computed discrete distance is equal to or less than the discrete distance threshold, is adapted to transfer detailed stereographic data to the buffer portion (7).

4. The navigation device according to claim 3, wherein
the discrete distance threshold is variably set in accordance with one of a road condition and a road environment condition.

5. The navigation device according to any one of claims 1 to 4, wherein
the stereograph database (22) is adapted to store detailed stereographic data and simplified stereographic data pertaining to the same solid body, and the stereographic data reading unit (6) is adapted to read from the stereograph database (22) one of the detailed stereographic data and the simplified stereographic data depending on the discrete distance.

6. The navigation device according to any one of claims 1 to 4, wherein
the stereograph database (22) is adapted to store only detailed stereographic data pertaining to the same solid body, and for a solid body with a long discrete distance, the stereographic data reading unit (6) is adapted to convert the detailed stereographic data thereof as read from the stereograph database (22) into simplified stereographic data through simplification processing, and is adapted to transfer the simplified stereographic data to the buffer portion (7).

7. The navigation device according to claim 6, wherein
the simplification processing comprises at least one of:
reducing at least one of a resolution and a gradient of texture data of the detailed stereographic data;
reducing a number of polygons of polygon data; and
any combination thereof.

8. The navigation device according to any one of claims 1 to 7, wherein
the discrete distance is a shortest distance between the guidance route and a plane outer shape in stereographic data of the solid body.

9. A display system for three-dimensional map display, comprising:
a map database (2) having a road database (21) that is adapted to store road data and a stereograph database (22) that is adapted to store stereographic data of a solid body;
a road information storage portion for storing road information pertaining to a set road set in advance based on the road data;
a stereographic data reading unit (6) for accessing the map database (2), computing a discrete distance between the set road and the solid body, and transferring stereographic data pertaining to the solid body to a buffer portion (7), the stereographic data being selectively simplified depending on the discrete distance; and
a map image generating unit (9) for generating a three-dimensional map image for the set road based on the stereographic data loaded from the buffer portion (7).

10. A program for a navigation device for three-dimensional map display that includes a map database (2) having a road database (21) that is adapted to store road data and a stereograph database (22) that is adapted to store stereographic data of a solid body, and a route information storage portion (42) for storing route information pertaining to a guidance route set based on the road data, the program comprising program code which, when run on a computer, causes the computer performing the functions of:
accessing the map database (2), computing a discrete distance between the guidance route and the solid body, and transferring stereographic data pertaining to the solid body to a buffer portion (7), the stereographic data being selectively simplified depending on the discrete distance; and
generating a three-dimensional map image for route guidance based on the stereographic data loaded from the buffer portion (7).
